# EUROPÄISCHE PATENTANMELDUNG

(11) **EP 0 566 536 A1**
(43) Veröffentlichungstag der Anmeldung: **20.10.1993**
(21) Anmeldenummer: 93810247.2
(22) Anmeldetag: 06.04.1993
(51) Int. Cl.: C08G 61/12, H01B 1/12

(54) **Elektrisch leitende Kunststoffzusammensetzungen und deren Verwendung**

(30) Priorität: 15.04.1992 CH 1248/92
(71) Anmelder: Japat Ltd, CH-4057 Basel (CH)
(72) Erfinder: Ohwa, Masaki, Dr., Kobe-shi, Hyogo-ken, 657 (JP); Finter, Jürgen, Dr., W-7800 Freiburg (DE); Wernet, Wolfgang, Dr., Kobe-shi, Hyogo-ken, 657 (JP)
(74) Vertreter: Becker, Konrad

(57) **Zusammenfassung**

Zusammensetzung aus a) mindestens einem Polyheteroaromaten oder einem Polyanilin in oxidierter, polykationischer Form, und b) mindestens einem Polyanion eines filmbildenden thermoplastischen Polymeren mit sulfonatalkylierten Alkoholgruppen 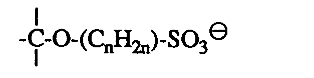
in wiederkehrenden Struktureinheiten, worin die Gruppe -(CₙH₂ₙ)- für lineares oder verzweigtes C₂-C₁₂-Alkylen mit 2 bis 5 C-Atomen in der Kohlenstoffkette steht, das unsubstituiert oder mit C1-C4-Alkoxy substituiert ist.

Die Zusammensetzung ist elektrisch leitend und thermoplastisch verarbeitbar. Sie kann zur Herstellung von Formkörpern oder in Form von Pulvern als Füllstoff für Kunststoffe verwendet werden.

## Beschreibung

Die Erfindung betrifft Zusammensetzungen aus a) mindestens einem oxidierten polykationischen Polyheteroaromaten oder mindestens einem Polyanilin und b) mindestens einem Polyanion eines thermoplastischen Polymeren mit sulfonatalkylierten Alkoholgruppen 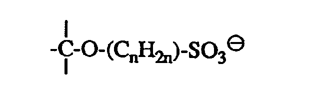
in wiederkehrenden Struktureinheiten, Verfahren zur Herstellung der Zusammensetzungen, die Verwendung der Zusammensetzungen zur Herstellung elektrisch leitender Formkörper und die Verwendung feinteiliger elektrisch leitender Zusammensetzungen als Füllstoffe für Kunststoffe.

Es ist bekannt, dass man durch elektrochemische Polymerisation von Heteroaromaten, besonders Pyrrol, in Gegenwart nicht-nukleophiler Anionen elektrisch leitende Salze von polykationischen Polyheteroaromaten erhält. Die mechanischen und oft auch elektrischen Eigenschaften solcher in der Regel auf Anoden als Film abgeschiedener Salze von Polyheteroaromaten sind für viele Anwendungen ungenügend.

In der GB-A-2 124 635 sind Zusammensetzungen aus polyanionischen Polymeren mit Sulfonatgruppen in wiederhehrenden Struktureinheiten und polykationischen Polyheteroaromaten oder Polyanilinen beschrieben, die gute elektrische aber ungenügende mechanische Eigenschaften aufweisen. So werden die erhaltenen Produkte als zäh und flexibel, aber spröde bezeichnet, und sie können nicht nach thermoplastischen Formgebungsverfahren verarbeitet werden.

M. B. Gieselmann et al. beschreiben im Macromelucules 23, Seiten 3118 bis 3124 (1990) Zusammensetzungen aus polykationischem Polypyrrol und einem polyanionischen N-sulfonatalkyliertem Poly-(p-phenylen)-terephthalsäureamid Es werden nur mässige Leitfähigkeiten bei einer verbesserten thermischen Stabilität erzielt, wobei die Materialien jedoch auch als spröde bezeichnet werden und nicht thermoplastisch verarbeitbar sind.

Aus der US-A-5 061 401 sind Zusammensetzungen mit aus kationischen Polyheteroaromaten oder Polyanilinen und polymeren Sulfaten als Polyanionen bekannt, die thermoplastisch verformbar sind und hervorragende mechanische Eigenschaften und elektrische Eigenschaften aufweisen. Die Sulfatgruppe ist direkt an die Hydroxylgruppe von wiederkehrenden Struktureinheiten der thermoplastischen Polymeren gebunden. Bei diesen Zusammensetzungen wird es als nachteilig angesehen, dass die elektrische Leitfähigkeit vom Molekulargewicht der Polyanionen abhängig ist, was die Herstellung von Produkten mit reproduzierbaren Eigenschaften erschwert.

Es wurde nun gefunden, dass sich Polymere mit sulfonatalkylierten Hydroxylgruppen hervorragend als Polyanionen für die Herstellung elektrisch leitenden Zusammensezungen mit polykationischen Polyheteroaromaten oder Polyanilinen eignen, die überraschend hohe und vom Molekulargewicht der anionischen Polymeren unabhängige elektrische Leitfähigkeiten aufweisen, die durch Versaecken unerwartet noch wesentlich erhöht werden kann. Die Zusammensetzungen sind ferner thermoplastisch verarbeitbar, und weisen hervorragende mechanische Eigenschaften wie zum Beispiel eine hohe Zugfestigkeit und Bruchdehnung auf. Bestimmte mechanische Eigenschaften wie zum Bespiel die Reissfestigkeit können durch Versaecken noch wesentlich verbessert werden.

Ein Gegenstand der Erfindung ist eine Zusammensetzung aus a) mindestens einem Polyheteroaromaten oder einem Polyanilin in oxidierter, polykationischer Form, und b) mindestens einem Polyanion eines filmbildenden thermoplastischen Polymeren mit sulfonatalkylierten Alkoholgruppen 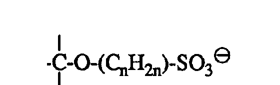
in wiederkehrenden Struktureinheiten, worin die Gruppe -(CₙH₂ₙ)- für lineares oder verzweigtes C₂-C₁₂-Alkylen mit 2 bis 5 C-Atomen in der Kohlenstoffkette steht, das unsubstituiert oder mit C₁-C₄-Alkoxy substituiert ist.

Unter Polyheteroaromaten werden im Rahmen dieser Erfindung Homo- und Copolymere verstanden, die wiederkehrende heteroaromatische Struktureinheiten enthalten. Sie können höhermolekular oder auch oligomer sein, sofern sie bei Raumtemperatur fest sind und Filme zu bilden vermögen. Bevorzugt sind Polyheteroaromaten aus 5- oder 6-gliedrigen Ringen, die 1 bis 3, bevorzugt 1 Heteroatom aus der Grupe -O-, -S- und -N- enthalten, und deren C-Atome unsubstituiert oder mit C₁-C₁₆-Alkyl, besonders C₁-C₁₂-Alkyl substituiert sind. Vorzugsweise sind 2 C-Atome nicht substituiert, um die elektrochemische bzw. chemische Polymerisation durchführen zu können. Der 5- oder 6-gliedrige Ring ist bevorzugt ausgewählt aus der Gruppe Pyrrol, Thiophen, Furan, 2,2'-Bipyrrol, 2,2'-Bithiophen, 2,2'-Bifuran, Thiazol, Oxazol, Thiadiazol und Imidazol.

Besonders bevorzugt ist der Polyheteroaromat aus einem Pyrrol der Formel 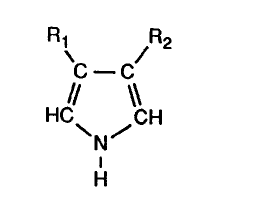
gebildet, worin R₁ und R₂ unabhängig voneinander H oder C₁-C₆-Alkyl, C₁-C₁₆-Alkoxy oder R₁ und R₂ zusammen Tri- oder Tetramethylen bedeuten. R₁ und R₂ können z.B. für C₁-C₁₂-Alkyl oder C₁-C₁₂-Alkoxy, wie z.B. für Methyl, Methoxy oder Ethyl bzw. Ethoxy stehen, und stellen besonders H dar. Die NH-Gruppe des Pyrrols kann mit C₁-C₁₂-Alkyl, besonders C₁-C₆-Alkyl substituiert sein. R₁ und R₂ zusammen können auch für Tri- oder Tetramethylen stehen. Besonders bevorzugt ist Pyrrol.

Als Aniline sind z.B. Anilin selbst und in 3-Stellung mit C₁-C₁₂-Alkyl oder C₁-C₁₂-Alkoxy, bevorzugt C₁-C₆-Alkyl oder C₁-C₆-Alkoxy substituiertes Anilin geeignet.

Die erfindungsgemässe Zusammensetzung enthält pro Struktureinheit des Polyheteroaromaten bevorzugt 0,1 bis 0,9, besonders bevorzugt 0,1 bis 0,6, insbesondere bevorzugt 0,15 bis 0,4 Struktureinheiten mit sulfonatalkylierten Alkoholgruppen

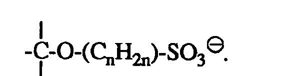

Die Gruppe -(CₙH₂ₙ)- stellt bevorzugt lineares oder verzweigtes C₃-C₈-Alkylen mit 3 bis 5 C-Atomen in der Kohlenstoffkette und besonders bevorzugt lineares C₃-C₅-Alkylen dar. Einige Beispiele sind Ethylen, Methylethylen, Dimethylethylen, 1,3-Propylen, Methyl-1,3-propylen, Dimethyl-1,3-propylen, Trimethyl-1,3-propylen, 1,4-Butylen, Methyl-1,4-butylen, Dimethyl-1,4-butylen, Trimethyl-1,4-butylen, Tetramethyl-1,4-butylen, 1,3-oder 1,5-Pentylen und 1,3-, 1,4-, 1,5- oder 1,6-Hexylen. Insbesondere handelt es sich bei der Gruppe -(CₙH₂ₙ)-um Trimethylen und Tetramethylen.

Das in der erfindungsgemässen Zusammensetzung verwendete thermoplastische Polymer mit versalzten sulfonatalkylierten Alkoholgruppen 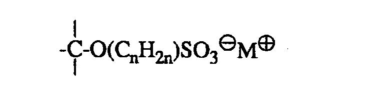
weist vorzugsweise eine Glasumwandlungstemperatur von - 100 bis 350°C, besonders bevorzugt -50 bis 250°C auf, gemessen nach der DSC-Methode (Differential-Scannning-Calorimetry).M bedeutet ein Alkalimetall- oder ein Ammoniumkation, die nachfolgend für die Polymeren beschrieben werden.

Die Zugfestigkeit dieses thermoplastischen Polymeren beträgt bevorzugt mindestens 5 MPa, besonders bevorzugt mindestens 10 MPa, gemessen nach DIN 53 455. Die Zugfestigkeit kann je nach Art der Polymeren bis zu 1000 MPa, bevorzugt bis zu 500 MPa und insbesondere bevorzugt bis zu 300 MPa betragen. Der Polymerisationsgrad kann z.B. 5 bis 10000, bevorzugt 10 bis 5000 und insbesondere bevorzugt 10 bis 1000 betragen.

Das Verhältnis von freien Alkoholgruppen zu sulfonatalkylierten Alkoholgruppen 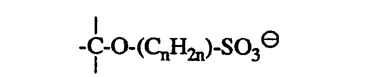
im thermoplastischen Polymer kann z.B. von 50:1 bis 1:50, bevorzugt 10:1 bis 1:10 betragen.

Die sulfonatalkylierten Alkoholgruppen können als sekundäre Gruppen CH-O-(CₙH₂ₙ)-SO₃^{⊖} oder tertiäre Gruppen C-O-(CₙH₂ₙ)SO₃^{⊖} im Polymerrückgrat; oder in Seitengruppen des Polymeren als primäre Gruppen -CH₂-O-(CₙH₂ₙ)SO₃⊖ endständig, oder als sekundäre Gruppen CH-O-(CₙH₂ₙ)-SO₃^{⊖} oder als tertiäre Gruppen C-O-(CₙH₂ₙ)SO₃^{⊖} mittelständig gebunden sein.

Den thermoplastischen Polymeren können unterschiedliche Hydroxylgruppen enthaltende Polymere oder Mischungen davon zu Grunde liegen, z.B. Polyester, Polyesteramide, Polyurethane, Polyamide, Polycarbonate und Polyimide aus Hydroxylgruppen enthaltenden Monomeren; verseifte Polymerisate von Vinylestern oder -ethern; hydroxylierte Polydiolefine wie z.B. Polybutadien, Polyisopren oder Chloropren sowie Copolymeren mit olefinischen Monomeren; Polyacrylate oder Polymethacrylate mit Hydroxyalkylresten in der Estergruppe; Polysiloxane mit Hydroxyalkylgruppen; oder reduzierte Polyketone oder Copolymere davon; Polyetheraus Glycidylverbindungen und Diolen; Polyvinylphenole oder Copolymere von Vinylphenol und olefinischen Comonomeren; sowie Copolymerisate von Vinylalkohol, oder Hydroxylalkyl enthaltenden Acrylaten oder Methacrylaten, oder hydroxylierten Dioloefinen mit ethylenisch ungesättigten Comonomeren wie z.B. Acrylnitril, Olefinen, Diolefinen, Vinylchlorid, Vinylidenchlorid, Vinylfluorid, Vinylidenfluorid, Styrol, a-Methylstyrol, Maleinsäureanhydrid, Maleinsäureimid, Vinylethern und Vinylestern.

Den sulfonatalkylierten thermoplastischen Polymeren liegen bevorzugt Polymere aus der Gruppe Polyaddukte aus Glycidylverbindungen mit durchschnittlich mehr als einer Epoxidgruppe und einem Diol; Homo-und Copolymere von Hydroxyalkylacrylaten beziehungsweise -methacrylaten; Homo-und Copolymerevon Vinylalkohol; Homo- und Copolymere von Butadien, Isopren und Chloropren, deren Doppelbindungen teilweise oder ganz hydroxyliert sind; Polyimide aus hydrierten Ketotetracarbonsäuren, besonders Benzophenontetracarbonsäuren; Hydroxyalkylpolysiloxane; und Polyester, Polyamide, Polyurethane und Polyimide aus C₄-C₁₂-Alkenylendiolen beziehungsweise -diaminen, deren Doppelbindung hydroxyliert ist, zu Grunde.

Bei dem thermoplastischen Polymer kann es sich z.B. um ein mindestens teilweise sulfonatalkyliertes Polyaddukt aus a) einer Glycidylverbindung mit durchschnittlich mehr als einer Epoxidgruppe und b) einem Diol handeln, das Gruppen 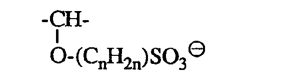
in der Polymerkette enthält, worin die Gruppe -CₙH₂ₙ- die zuvor angegebenen Bedeutungen hat, einschliesslich der Bevorzugungen.

Den Polyaddukten liegen bevorzugt Glycidylverbindungen mit durchschnittlich zwei Epoxidgruppen im Molekül zu Grunde.

Als Glycidylverbindungen kommen vor allem solche mit zwei an ein Heteroatom (z.B. Schwefel, vorzugsweise Sauerstoff oder Stickstoff) gebundenen Glycidylgruppen, ß-Methylglycidylgruppen oder 2,3-Epoxycyclopentylgruppen in Frage; genannt seien insbesondere Bis-(2,3-epoxycyclopentyl)-ether, Diglycidylether von mehrwertigen aliphatischen Alkoholen, wie 1,4-Butandiol, oder Polyalkylenglykolen, wie Polypropylenglykole; Diglycidylether von cycloaliphatischen Polyolen, wie 2,2-Bis-(4-hydroxycyclohexyl)-propan; Diglycidylethervon mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5'-dibromphenyl)-propan, 1,3-Di-(p-hydroxyphenyl)-ethan; Di-(ß-methylglycidyl)-ether der oben angeführten zweiwertigen Alkohole oder zweiwertigen Phenole; Diglycidylester von Dicarbonsäuren, wie Phthalsäure, Terephthalsäure, A₄-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N'-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N'-Dimethyl-N,N'- diglycidyl-bis-(p-aminophenyl)-methan; N',N"-Diglycidyl-N-phenyl-isocyanurat; N,N'-Diglycidylethylenharnstoff; N,N'-Diglycidyl-5,5-dimethyl-hydantoin, N,N'-Diglycidyl-5-isopropyl-hydantoin, N,N-Methylen-bis-(N',N'-diglycidyl-5,5-dimethylhydantoin), 1,3-Bis-(N-glycidyl-5,5-dimethylhydantoin)-2-hydroxypropan; N,N'-Diglycidyl-5,5-dimethyl-6-isopropyl-5,6-dihydro-uracil.

Die Glycidylverbindungen können mit aliphatischen, cycloaliphatischen oder aromatischen Diolen zu den bevorzugten Polyaddukten umgesetzt werden, wobei durch Addi tion an der Glycidylgruppe eine sekundäre Alkoholgruppe gebildet wird die sulfatiert werden kann.

Die Glycidylverbindungen können aber auch mit primären, aliphatischen, cycloaliphatischen oder aromatischen Monoaminen (z.B. Anilin, Toluidin, C₁-C₁₂-Alkylaminen, C₂-C₁₂-Hydroxyalkylaminen), aliphatischen, cycloaliphatischen oder aromatischen Dicarbonsäuren (z.B. Maleinsäure, Adipinsäure, Trimethyladipinsäure, Sebacinsäure, Azelainsäure, Bernsteinsäure, Dodecylbernsteinsäure, Phthalsäure, Terephthalsäure, A₄-Tetrahydrophthalsäure, Hexahydrophthalsäure, 4-Methylhexahydrophthalsäure, 3,6-Endomethylen-A₄-tetrahydrophthalsäure, 4-Methyl-3,6-endomethylen-A₄-tetrahydrophthalsäure) oder aliphatischen, cycloaliphatischen, heterocyclischen oder aromatischen Bissekundäraminen oder Bissekundärcarbonsäureamiden (z.B. N,N'-Dimethylethylendiamin, N,N'-Dimethylpropylen- 1,3-diamin, N,N'-Dimethylhexamethylendiamin, N,N'-Dicyclohexylhexamethylendiamin, N,N',N"-Trimethyldiethylentriamin, N,N'-Diethylpropylen-1,3-diamin, N-Methyl-3,5,5-trimethyl-3-(methylaminomethyl)-cyclohexylamin, N,N'-dimethylierte oder -diethylierte aromatische Diamine, z.B. m- oder p-Phenylendiamin, Bis-(4-aminophenyl)-methan oder -sulfon, 2,2-Bis-(4-aminophenyl)-propan, N,N-Dimethyl-m-xylylendiamin, sowie Ethylenharnstoff, 5,5-Dimethylhydantoin, 5-isopropylhydantoin, N,N-Methylen-bis-5,5-dimethylhydantoin, 1,3-Bis-(5,5-dimethyl)-2-hydroxypropan, 5,5-Dimethyl-6-isopropyl-5,6-dihydrouracil), durch Polyaddition zu linearen Polyaddukten umgesetzt werden.

Bevorzugt ist eine erfindungsgemässe Zusammensetzung, worin das Polyaddukt
a) 100 bis 5 Mol-% gleiche oder verschiedene Struktureinheiten der Formel 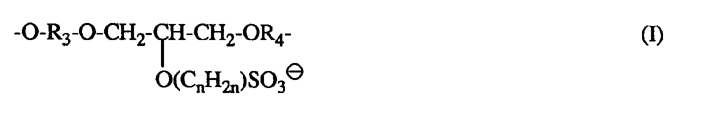
   und
b) 95 bis 0 Mol-% gleiche oder verschiedene Struktureinheiten der Formel II 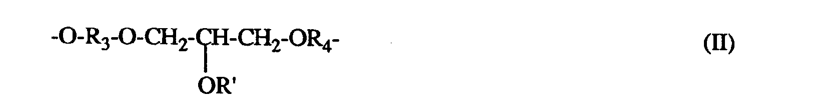
   enthält, bezogen auf das Polyaddukt wobei R₃ und R₄ unabhängig voneinander den um zwei Hydroxylgruppen verminderten Rest eines Diols mit aliphatischen oder aromatischen Diolgruppen darstellen, und R'H, C₁-C₂₀-Alkyl, C₁-C₂₀-Acyl oder mit einem C₁-C₂₀-Kohlenwasserstoffrest N-substituiertes Aminocarbonyl bedeutet.

R' in der Bedeutung von C₁-C₂₀-Alkyl kann linear oder verzweigt sein. R' in der Bedeutung von Acyl kann z.B. C₁-C₂₀-Alkyl-CO-, C₅-Cₛ-Cycloalkyl-CO-, C₁-C₁₅-Alkyl-C₅-C₈-Cycloalkyl-CO, C₅-C₈-Cycloalkyl-CH₂-CO-, C₁-C₁₄-Alkyl-C₅-C₈-Cycloalkyl-CH₂ -CO, Phenyl-CO, Benzyl-CO, C₁-C₁₄-Alkylphenyl-CO- oder -benzyl-COsein. Bei dem Kohlenwasserstoffrest im Aminocarbonyl kann es sich z.B. um C₁-C₂₀-Alkyl-, C₅-C₈-Cycloalkyl-, C₁-C₁₅-Alkyl-C₅-C₈-cycloalkyl-, C₅-C₈-Cycloalkyl-CH₂-, C₁-C₁₄-Alkyl-C₅-C₈-cycloalkyl-CH₂-, Phenyl-, Benzyl-, C₁-C₁₄-Alkylphenyl- oder -benzyl- handeln. R' steht bevorzugt für H.

Bevorzugt sind 90 bis 10, besonders bevorzugt 15 bis 60 Mol% Struktureinheiten der Formel und 90 bis 10, besonders bevorzugt 85 bis 40 Mol% Struktureinheiten der Formel II enthalten.

In einer bevorzugten Ausführungsform stellen R₃ und R₄ gleiche Reste dar. R₃ und R₄ in der Bedeutung als Rest mit aliphatischen Diolgruppen enthält bevorzugt 2 bis 12, besonders 2 bis 8 C-Atome. Die Hydroxylgruppen können an offenkettige oder cyclische aliphatische Reste gebunden sein. Als aliphatischer Rest kommt z.B. lineares oder verzweigtes C₂-C₁₂-Alkylen, C₃-C₈-Cycloalkylen, C₁-C₄-Alkyl-C₅-C₈-cycloalkylen, Cyclohexylmethylen oder Cyclohexyldimethylen in Frage. Beispiele sind Ethylen, 1,2- oder 1,3-Propylen, 1,2-, 1,3- oder 1,4-Butylen, 1,2-, 1,3-, 1,4- oder 1,5-Pentylen, 1,2-, 1,3-, 1,4-, 1,5 oder 1,6-Hexylen, Heptylen, Octylen, Nonylen, Decylen, Undecylen, Dodecylen, 1,3-Cyclopentylen, 1,3- oder 1,4-Cyclohexylen, 2-Methyl-1,4-cyclohexylen und Cyclohexyl- 1,4-dimethylen.

Die aromatischen Diolgruppen derfür die Polyaddukte verwendeten Diole sind insbesondere phenolische Gruppen. Die Diolreste mit phenolischen Gruppen enthalten bevorzugt 6-30, besonders bevorzugt 6-20 C-Atome. Eine bevorzugte Ausführungsform sind Zusammensetzungen, worin R₃ und R₄ unabhängig voneinander einen Rest der Formel III 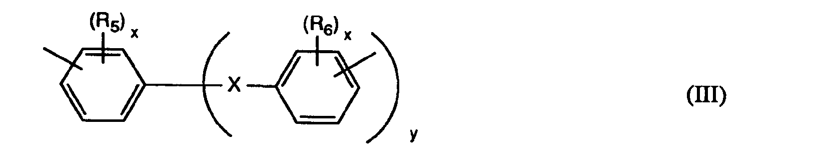
darstellen, worin X eine direkten Bindung, C₁-C₄-Alkylen, C₂-C₁₂-Alkyliden, C₅-C₈-Cycloalkyliden, -O-, -S-, -SO-, -SO₂-, -CO-, -C0₂-, -N(C₁-C₄-Alkyl)- oder -Si(CH₃)₂- bedeutet, R₅ und R₆ unabhängig voneinander H, Halogen, C₁-C₄-Alkyl oder C₁-C₄-Alkoxy sind, und x 1 oder 2 bedeutet und y für 0 oder 1 steht.

X stellt bevorzugt eine direkte Bindung, Methylen, Ethylen, C₂-C₆-Alkyliden, Cyclohexyliden oder Cyclopentyliden, -O- oder -S- dar. R₅ und R₆ stehen vorzugsweise für H oder Methyl und y steht bevorzugt für 1.

Insbesondere bedeuten R₃ und R₄ den Rest

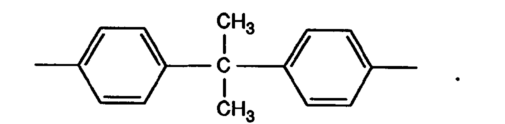

Eine weitere bevorzugte Ausführungsform sind Zusammensetzungen, worin das thermoplastische Polymer ein mindestens teilweise sulfonatalkylierter Polyvinylalkohol oder sulfonatalkyliertes Polyvinylalkohol-Copolymer mit Gruppen

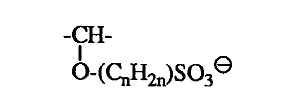

ist. Sulfonatalkylierte Polyvinylalkohol-Copolymere sind bevorzugt in der Zusammensetzung enthalten. Bevorzugt sind solche Zusammensetzungen mit Polyvinylalkoholcopolymeren, worin das Copolymer
a) 90 bis 5 Mol% Struktureinheiten der Formel IV 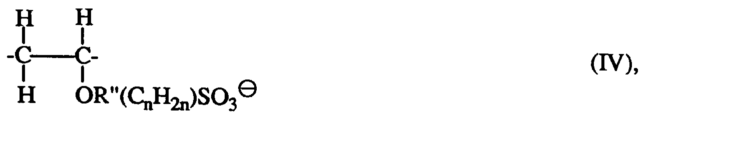
   und
b) 95 bis 10 Mol% gleiche oder verschiedene Struktureinheiten der Formel V 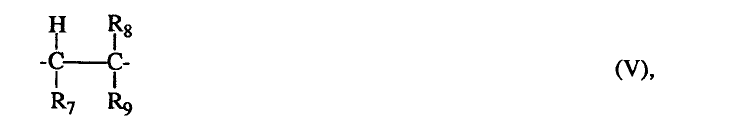
   enthält, worin R₇für H, C₁-C₆-Alkyl, -COOR₁₀ oder-COO⊖ steht, R₈ H, F, Cl, CN oder C₁-C₆-Alkyl bedeutet, und Rg H, OH, R"OH, F, Cl, CN, R₁₀-O-, C₁-C₁₂-Alkyl, -COO⊖, -COOR₁₀, -OCO-R₁₀, Methylphenyl oder Phenyl darstellt, wobei R₁₀ C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder (C₁-C₁₂-Alkyl)benzyl darstellt und R" für lineares oder verzweigtes C₂-C₁₈-Alkylen, Poly(C₂-C₆-oxaalkylen) mit 2 bis 6 Oxaalkyleneinheiten steht.

Bevorzugt sind 60 bis 10, besonders 50 bis 10 Mol% Struktureinheiten der Formel IV, und 40 bis 90, besonders 50 bis 90 Mol% Strukturelemente der Formel V enthalten.

R" enthält als Alkylen bevorzugt 2 bis 12, besonders bevorzugt 2 bis 8, und insbesondere bevorzugt 2 bis 6 C-Atome. Beispiele sind Ethylen und die Isomeren von Propylen, Butylen, Pentylen, Hexylen, Heptylen, Octylen, Nonylen, Decylen, Undecylen, Dodecylen, Tetradecylen,Hexadecylen und Octadecylen. Bevorzugt sind Ethylen, 1,2- und 1,3-Propylen, 1,2-, 1,3- und 1,4-Butylen, 1,2-, 1,3-, 1,4- und 1,5-Pentylen und 1,2-, 1,3-, 1,4-, 1,5- und 1,6-Hexylen.

R" in der Bedeutung von Poly(oxaalkylen) enthält bevorzugt 2 bis 4 Oxaalkyleneinheiten, und bevorzugt 2 bis 4, besonders bevorzugt 2 oder 3 C-Atome im Alkylenrest.

R₇ steht bevorzugt für H. Bedeutet R₇ Alkyl, so handelt es sich bevorzugt um Methyl oder Ethyl. Bedeutet R₇ -COOR₁₀, so stellt R₁₀ bevorzugt C₁-C₁₂-, besonders C₁-C₆-Alkyl dar.

Bedeutet R₈ Alkyl, so handelt es sich bevorzugt um C₁-C₄-Alkyl, z.B. Methyl, Ethyl, n-Propyl und n-Butyl. R₈ steht bevorzugt für H, CI oder C₁-C₄-Alkyl.

Bedeutet R₉ die Gruppe R₁₀-O-, so stellt R₁₀ bevorzugt C₁-C₁₂-, besonders C₁-C₆-Alkyl dar. Bedeutet R₉ Alkyl, so enthält es bevorzugt 1 bis 6, besonders 1 bis 4 C-Atome. Bedeutet R₉ die Gruppe -COOR₁₀, so stellt R₁₀ bevorzugt C₁-C₁₂-, besonders C₁-C₆-Alkyl, Cyclopentyl oder Cyclohexyl dar. Bedeutet R₉ die gruppe -OCO-R₁₀, so stellt R₁₀ bevorzugt C₁-C₁₂-, besonders C₁-C₆-Alkyl, Phenyl oder Benzyl dar.

In einer bevorzugten Ausführungsform stehen R₇ für H, R₈ für H, F, Cl, Methyl oder Ethyl, und R₉ für H, OH, F, Cl, CN, C₁-C₄-Alkyl, C₁-C₆-Alkoxy, -COO-C₁-C₆-Alkyl, -OOC-C₁-C₆-Alkyl oder Phenyl.

Besonders bevorzugt sind Zusammensetzungen, worin in Formel V R₇ H bedeutet, R₈ H oder Methyl darstellt, und R₉ H, OH, CN, Methyl, OCH₃ oder -COOCH₃ bedeutet.

Ganz besonders bevorzugt sind Zusammensetzungen, die 5 bis 50 Mol-% Struktureinheiten der Formel IV, 95 bis 50 Mol-% Struktureinheiten der Formel -CH₂-CH₂- und 0 bis 20 Mol-% Struktureinheiten der Formel -CH₂-CH(OH)- enthalten, wobei sich die Mol-% zu 100 Prozent addieren.

Eine weitere bevorzugte Ausführungsform sind Zusammensetzungen, worin das thermoplastische Polymer ein sulfonatalkyliertes Polymer eines teilhydroxylierten Polybutadiens, Chloroprens oder Polyisoprens ist.

Eine bevorzugte Ausführungsform sind solche Zusammensetzungen, die 5 bis 70 Mol-% Struktureinheiten der Formel VI 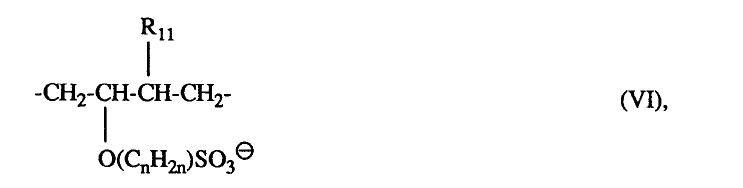
und 30 bis 95 Mol-% Struktureinheiten der Formel Vla,

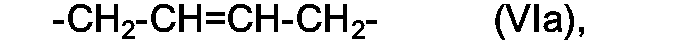

worin R₁₁ für H, OH oder CI steht und die Gruppe -CₙH₂ₙ- die zuvor angegebene Bedeutung hat, einschliesslich der Bevorzugungen. Diese Polymeren können bis zu 65 Mol-% Strukturelemente der Formel V enthalten, wobei sich die Molprozente zu 100 Mol-% addieren.

Bevorzugt sind in dieser Zusammensetzung 5 bis 50 Mol-% Struktureinheiten der Formel VI und 50 bis 95 Mol-% Struktureinheiten der Formel Vla enthalten. R₁₁ steht bevorzugt für H oder Cl.

Eine weitere bevorzugt Ausführungsform sind Zusammensetzungen, worin das thermoplastische Polymere ein sulfonatalkyliertes Polyimid mit Strukturelementen der Formel VII 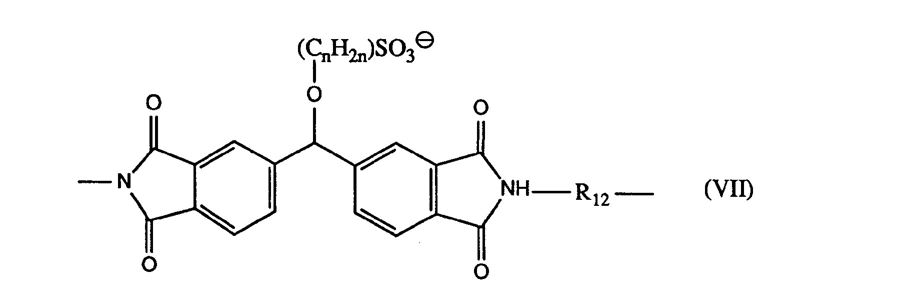
darstellt, worin R₁₂ für unsubstituiertes oder mit C₁-C₆-Alkyl oder C₁-C₆-Alkoxy substituiertes C₆-C₁₂-Arylen oder C₅-C₈-Cycloalkylen oder für den Rest 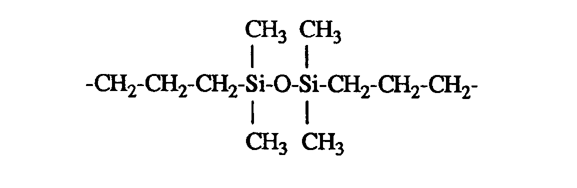 steht, und die Gruppe -CₙH₂ₙ- die zuvor angegebene Bedeutung hat, einschliesslich der Bevorzugungen.

Eine andere bevorzugte Ausführungsform sind Zusammensetzungen, worin das thermoplastische Polymere ein sulfonatalkyliertes Polyamid mit Strukturelementen der Formel VIII 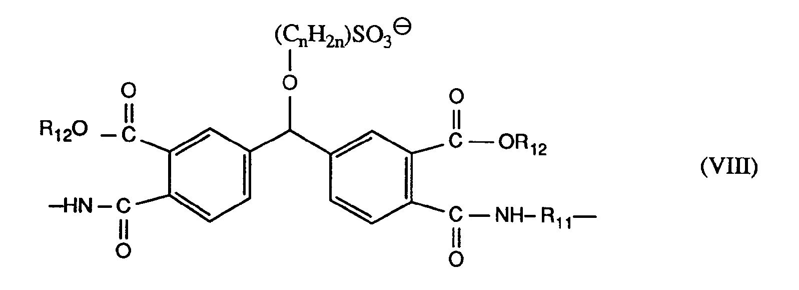
darstellt, worin

R₁₁ für unsubstituiertes oder mit C₁-C₆-Alkyl oder C₁-C₆-Alkoxy substituiertes C₆-C₁₂-Arylen oder C₅-C₈-Cycloalkylen oder für den Rest 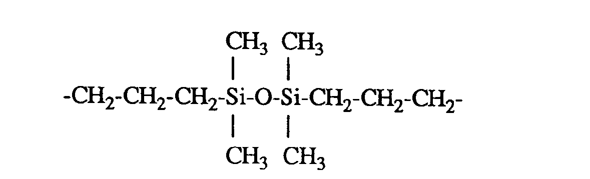
steht, R₁₂ C₁-C₁₂Alkyl bedeutet und die Gruppe -CₙH₂ₙ- die zuvor angegebene Bedeutung hat, einschliesslich der Bevorzugungen.

Enthält die Zusammensetzung mehr als ein Polyanion eines thermoplastischen Polymeren mit sulfonatalkylierten Alkoholgruppen, so sind binäre oder ternäre Mischungen bevorzugt.

Die Polyanionen der Komponente b) in der erfindungsgemässen Zusammensetzung leiten sich von bekannten oder nach an sich bekannten Verfahren herstellbaren polymeren Salzen ab. Es handelt sich um thermoplastische Polymere mit sulfonatalkylierten Alkhoholgruppen 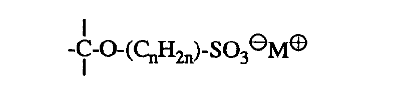
in wiederkehrenden Struktureinheiten, wobei M⊕ für ein Alkalimetall- oder Ammoniumkation steht.

Das Ammoniumkation kann z.B. NH₄⊖, ein protoniertes, primäres, sekundäres oder tertiäres Amin, oder quaternäres Ammonium oder Pyridinium sein. Das primäre Ammonium kann 1 bis 18 C-Atome, besonders 1 bis 12 und insbesondere 1 bis 6 C-Atome, das sekundäre Ammonium 2 bis 24, besonders 2 bis 12, insbesondere 2 bis 8 C-Atome, das tertiäre Ammonium 3 bis 30, besonders 3 bis 18 und insbesondere 3 bis 12 C-Atome, und das quaternäre Ammonium 4 bis 36, besonders 4 bis 24 und insbesondere 4 bis 18 C-Atome enthalten.

Bevorzugte polymere Salze sind solche, worin M⊕ Li⊕, Na⊕ oder K⊕ darstellt, oder R₁₃R₁₄R₁₅R₁₆N⊕ ist, worin R₁₃, R₁₄, R₁₅ und R₁₆ unabgängig voneinander H, unsubstituiertes oder Hydroxyl-substituiertes C₁-C₁₈-Alkyl, Phenyl, (C₁-C₁₂-Alkyl)phenyl, (C₁-C₁₂-Alkyl)benzyl, C₅-C₇-Cycloalkyl, (C₁-C₁₂-Alkyl)-C₅-C₇-cycloalkyl darstellen, oder R₁₃ und R₁₄ zusammen Tetramethylen, Pentamethylen oder 3-Oxapentylen sind und R₁₅ und R₁₆ die zuvor angegebenen Bedeutungen haben. Eine bevorzugte Ausführungsform sind Polymere, worin mindestens eines von R₁₃ bis R₁₆ nicht H bedeutet. Besonders bevorzugt sind Polymere, worin R₁₃ bis R₁₅ C₁-C₆-Alkyl und R₁₆ H bedeuten.

R₁₃ bis R₁₆ können in der Bedeutung von Alkyl linear oder verzweigt sein und bevorzugt 1 bis 12, besonders 1 bis 6 C-Atome enthalten. Beispiele sind Methyl, Ethyl, n- und i-Propyl, n-, i- und t-Butyl, Pentyl, Hexyl, Heptyl, Octyl, Nonyl, Decyl, Undecyl, Dodecyl, Tetradecyl, Hexadecyl und Octadecyl.

R₁₃ bis R₁₆ in der Bedeutung von Hydroxyalkyl kann linear oder verzweigt sein und enthält bevorzugt 2 bis 18, besonders 2 bis 12 und insbesondere 2 bis 6 C-Atome. Einige Beispiele sind 2-Hydroxyeth-1-yl, 1- oder 2-Hydroxy-prop-3-yl, 1-Hydroxybut-4-yl, 1 -Hydroxyhex-6-yl.

Beispiele für Alkylphenyl und Alkylbenzyl sind Methylphenyl, Dimethylphenyl, Ethylphenyl, n- oder i-Propylphenyl, n-, i- oder t-Butylphenyl, Hexylphenyl, Octylphenyl, Decylphenyl, Dodecylphenyl und entsprechend alkylierte Benzylreste.

R₁₃ bis R₁₆ in der Bedeutung von Cycloalkyl stellen besonders Cyclopentyl oder Cyclohexyl dar.

R₁₃ bis R₁₆ in der Bedeutung von Alkylcycloalkyl ist bevorzugt (C₁-C₁₂-Alkyl)cyclopentyl oder-cyclohexyl, z.B. Methyl- oder Ethylcyclopentyl oder-cyclohexyl.

Besonders bevorzugt stehen R₁₃ bis R₁₆ für C₁-C₆-Alkyl.

Die erfindungsgemäss zu verwendenden polymeren Salze sind bekannt oder können nach allgemein bekannten Verfahren hergestellt werden, wobei je nach Art der verwendeten Polymeren und der Verfahrensbedigungen Hydroxylgruppen in den verwendeten Monomeren mit üblichen Schutzgruppen geschützt werden können. Hydroxylgruppenhaltige Polymere sind vielfach beschrieben oder können nach bekannten Verfahren erhalten werden.

Die erfindungsgemäss zu verwendenden thermoplastischen polymeren Salze sind in bekannter Weise erhältlich, indem man ein thermoplastisches Polymer, das in wiederkehrenden StruktureinheitenAlkoholgruppen 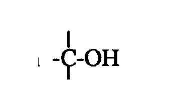
enthält, mit einem Sulton der Formel 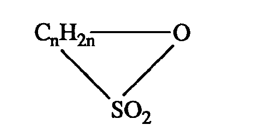
in Gegenwart eines inerten Lösungsmittels und eines Alkalimetall- oder Ammoniumsalzes umsetzt, und danach das polymere Salz isoliert.

Geeignete inerte Lösungsmittel sind besonders polare aprotische Lösungsmittel, wobei sich die Wahl des Lösungsmittels hauptsächlich nach der Löslichkeit der Hydroxylgruppen enthaltenden Polymeren richtet. Die Lösungsmittel können alleine oder in Mischung aus mindestens 2 Lösungsmitteln verwendetwerden. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan, 1,1,1-Trichlorethan, 1,1,2,2-Tetrachlorethan, Carbonsäureamide und Lactame wie N,N-Dimethylformamid, N,N-Diethylformamid, N,N-Dimethylacetamid, N,N-Diethylacetamid, N-Methyl-y-butyrolactam, N-Methyl-s-caprolactam, N-Methylpyrrolidon, N-Acetylpyrrolidon, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Dichlorbenzol, 1,2,4-Trichlorbenzol, Nitrobenzol.

Die Reaktionstemperatur beträgt z.B. 40 bis 200°C, vorzugsweise 60 bis 150°C. Nach Beendigung der Reaktion kann das polymere Salz mit einem Nichtlösungsmittel, vorteilhaft Wasser, ausgefällt, abfiltriert, gewaschen und getrocknet werden.

Sulfonatalkylierte Phenoxyharze sind zum Beispiel in der BE-B-847 353 beschrieben. Sulfonatalkylierte Polyvinylalkohole sind zum Beispiel in der EP-A-0 099 631 und in der FR-B-1 584 814 beschrieben.

Die erfindungsgemäss zu verwendenden polymeren Salze von sulfonatalkylierten Hydroxylgruppen enthaltenden Polymeren haben thermoplastische Eigenschaften. Ihre Glasumwandlungstemperatur ist im Vergleich zu den Ausgangspolymeren im wesentlichen unverändert und sie zeichnen sich durch ihre mechanische Festigkeit aus, z.B. durch eine hohe Zug- und Biegefestigkeit und hohe Flexibilität. Sie eignen sich hervorragend als Polyanionen für elektrisch leitende Polykationen von Polyheteroaromaten und Polyanilinen.

Die erfindungsgemässen Zusammensetzungen werden in an sich bekannter Weise hergestellt, indem man
a) in einer organischen, wässrig-organischen oder wässrigen Lösung einen Heteroaromaten oderein Anilin in Gegenwart eines erfindungsgemässen polymeren Salzes elektrochemisch polymerisiert und danach die Zusammensetzung von der Anode entfernt oder
b) einen Heteroaromaten oder ein Anilin in Gegenwart eines polymeren Salzes und eines inerten Lösungsmittels mit einem Oxidationsmittel umsetzt.

Die Zusammensetzung kann je nach den Reaktionsbedingungen als Pulver oder als Film erhalten werden. Das Verfahren b) wird vorteilhaft zur Herstellung eines pulverförmigen Materials und die Verfahrensstufe a) zweckmässig zur Herstellung eines filmförmigen Materials verwendet.

Geeignete Oxidationsmittel sind z.B. Peroxide und Persulfate, besonders H₂0₂, K₂S₂0₈ und (NH₄)₂S₂O₈ , sowie Eisen(III)-Verbindungen und Kupfer(II)-Verbindungen, besonders FeCl₃ und CuCl₂.

Die Elektrolyse kann potentiostatisch oder galvanostatisch durchgeführt werden. Als Anodenmaterial eignen sich z.B. inerte Metalle (Titan, Nickel, Platin, Stahl) oder ITO-Glas, oder auch nicht inerte Metalle wie z.B. Aluminium (siehe DE-A-3 906 563). Die Stromdichte kann z.B. 0,5-50, bevorzugt 2 bis 50 und besonders bevorzugt 2 bis 20 mA/cm² betragen. Ein geeignetes Anodenmaterial sind auch Bürstenelektroden.

Die Konzentration an polymeren Salzen kann 0,01 bis 1 Mol/l, bevorzugt 0,05 bis 0,5 Mol/1 betragen, bezogen auf die Reaktionsmischung. Die Konzentration an Heteroaromaten oder einem Anilin kann 0,01 bis 10 Vol.%, besonders 0,1 bis 5 Vol.% betragen, bezogen auf das Volumen der Reaktionsmischung.

Geeignete organische Lösungsmittel sind zuvor erwähnt worden. Bevorzugte Lösungsmittel sind Alkohole, z.B. Alkanole mit 1 bis 12 C-Atomen, die mit C₁-C₄-Alkoxy substituiert sein können. Beispiele sind Methanol, Ethanol, n- und i-Propanol, n-, i- und t-Butanol, Pentanol, Hexanol, Heptanol, Octanol, Decanol, Dodecanol, Methoxyethanol, Ethoxyethanol, Diethylenglykolmonomethyl- oder -monoethylether, 1-Methoxypropan-2-oder -3-ol.

Die Bildung von pulverförmigen Abscheidungen auf der Elektrode kann durch die Elektrolysebedigungen und besonders durch die Wahl des Lösungsmittels bestimmt werden. Die Gegenwart polarer protischer Lösungsmittel alleine oder in Mischung mit polaren Lösungsmitteln fördert die Bildung von Pulvern.

Eine bevorzugte Ausführungsform des Verfahrens ist dadurch gekennzeichnet, dass die Polymerisation in Gegenwart eines polaren protischen Lösungsmittels, bevorzugt in Gegenwart von Alkoholen durchgeführt wird, wobei M⊕ für ein Ammoniumkation mit mindestens einer organischen Gruppe steht. Besonders steht M⊕ hierbei für R₁₃R₁₄R₁₅R₁₆N⊕ worin R₁₃ bis R₁₆ unabhängig voneinander unsubstituiertes oder Hydroxyl-substituiertes C₁-C₁₈-Alkyl, Phenyl, (C₁-C₁₂-Alkyl)phenyl, (C₁-C₁₂-Alkyl)benzyl, C₅-C₇-Cycloalkyl, (C₁-C₁₂-Alkyl)-C₅-C₇-cycloalkyl darstellen, oder R₁₃ und R₁₄ zusammen Tetramethylen, Pentamethylen oder 3-Oxapentylen sind und R₁₅ und R₁₆ die zuvor angegebenen Bedeutungen haben. Insbesondere sind R₁₃ bis R₁₆ hierbei C₁-C₆-Alkyl, z.B. Methyl, Ethyl, n-Propyl und bevorzugt n-Butyl.

Die elektrochemische Polymerisation kann bei ausreichender Löslichkeit der Reaktanden auch in Wasser oderwässrig-organischer Lösung durchgeführt werden. Die Mitverwendung von Puffern ist zweckmässig. Geeignete Puffer sind z.B. Alkylammoniumphosphate mit 1 bis 3, besonders 2 oder 3 Alkylresten in der Ammoniumgruppe, die 1 bis 6, besonders 1 bis 4 C-Atome enthalten können. Beispiele sind Trimethyl-, Triethyl-, Tri-n-propyl-und Tri-n-butylammoniumphosphat. Geeignete Puffer sind auch Kationenaustauscher in ihrer protonierten Form.

Der Reaktionsmischung können auch weitere Substanzen zugegeben werden, die sich auf der Anode mitabscheiden, z.B. anionische Weichmacher oder anionische Farbstoffe.

Nach beendeter Elektrolyse können die erfindungsgemässen Zusammensetzungen in Form von pulverigen Abscheidungen oder Filmen von der Anode gelöst und durch Auswaschen mit Lösungsmitteln gereinigt werden. Die Teilchengrössen des Pulvers kann z.B. von 1 bis 5000 µm, bevorzugt von 10 bis 3000 µm betragen. Die Teilchen weisen je nach Eletrolysebedingungen unterschiedliche Gestalt auf. Es kann sich um gegebenenfalls verwachsene Dendrite, Nadeln, Stäbchen, Fasern oder tropfenförmige Teilchen handeln. Die Filme können eine Dicke von 5 µm bis 0,3 cm, bevorzugt 10 µm bis 0,1 cm aufweisen.

Die Oxidation mit Eisen(III)-Verbindungen kann z.B. bei Temperaturen von -20°C bis 60°C, bevorzugt 0°C bis 40°C durchgeführt werden. Geeignete Lösungsmittel sind zuvor bei der Herstellung der polymeren Salze erwähnt worden. Sofern die Eisen(III)-Verbindungen, z.B. Eisensalze, in organischen Lösungsmitteln unlöslich sind, werden zweckmässig wasserlösliche Lösungsmittel in Abmischung mit Wasser eingesetzt. Geeignete wasserlösliche Lösungsmittel sind insbesondere C₁-C₁₂-, bevorzugt C₁-C₄-Alkanole, die mit C₁-C₄-Alkoxy substituiert sein können. Beispiele für Alkanole sind zuvor erwähnt worden.

Geeignete Eisen(III)-Verbindungen sind z.B. Eisen(III)-Komplexe oder -Komplexsalze oder besonders Eisen(III)-Salze von anorganischen und organischen Säuren, wie z.B. HCI, HBr, HJ, H₂SO₄, HCI0₄, HN0₃, FS0₃H, CF₃SO₃H, Essigsäure und Propionsäure. Bevorzugt sind Eisen(III)-Halogenide, besonders Eisen(III)-chlorid. Neben Fe(III)-Salzen können auch andere Oxidationsmittel, wie Ammoniumperoxodisulfat und Cu(II)-Salze verwendet werden.

Die chemische Oxidationsmethode ist z.B. im Bull. Chem. Soc. Jpn. 62, S. 234-238 (1989) beschrieben. Die Reaktion verläuft schnell und die gewünschten Produkte fallen als schwarze Pulver aus, die abfiltriert werden und durch Auswaschen mit z.B. Wasser, NaOH oder beiden Mitteln gereinigt werden können. Sofern ionisches Chlorid enthalten ist, Kann es durch Behandeln der Pulver mit Chlorsulfonsäure und nachfolgendes Waschen mit Wasser entfernt werden.Die Korngrösse der Pulverteilchen beträgt z.B. von 0,1 µm bis 100 µm, bevorzugt von 1 µm bis 10 µm.

Anstelle von Anilin kann bei der chemischen Oxidation auch das entsprechende, gegebenenfalls halboxidierte Polyphenylenamin, z.B. Poly(p-phenylenamin-imin) eingesetzt werden.

Die Pulver weisen bei Verwendung von Eisen(III)-Salzen einen geringen Anionenanteil aus dem Oxidationsmittel auf, selbst bei einem grossen Ueberschuss an Eisen(III)-Salzen im Vergleich zu anionischen Gruppen im Polyelekaolyten.

Bei den erfindungsgemässen Zusammensetzungen handelt es sich um schwarze rieselfähige und elektrisch leitende Pulver oder Filme, mit Glasumwandlungstemperaturen bis zu etwa 200°C und mehr, die thermoplastische Eigenschaften aufweisen und aus denen nach bekannten Pressverfahren einschliesslich Spritzpressen unter Ausübung von Druck Formkörper in beiiebigerdreidimensionaier Gestalt hergestellt werden können. Die Filme können auch nach Streckverfahren, zum Beispiel Tiefziehen, verarbeitet werden. Die mechanischen Eigenschaften von Filmen aus den erfindungsgemässen Zusammensetzungen können durch Versaecken im Bereich der Glasumwandlungstemperaturen noch verbessert werden. Ein weiterer Gegenstand der Erfindung ist die Verwendung der erfindungsgemässen Zusammensetzungen zur Herstellung von elektrisch leitenden Formkörpern, z.B. von Stäben, Platten, Gehäusen und anderen Formteilen, die zur Abschirmung elektromagnetischer Felder oder als Elektroden eingesetzt werden können.

Die erfindungsgemässen Zusammensetzungen können in Form von Pulvern als Pressmassen verwendet werden. Die Pressmassen können bei niedrigen Temperaturen zu Sinterkörpern verarbeitet werden, die porös sein können. Bei Anwendung von hohem Druck und höheren Temperaturen, z.B. unterhalb der Zersetzungstemperaturen bis zum Bereich der Glasumwandlungstemperaturen, bevorzugt 60°C bis 150°C, sind die Pressmassen überraschend fliessfähig. Unter solchen Verarbeitungsbedingungen erhält man kompakte Formkörper mit glatten Oberflächen und guten mechanischen Eigenschaften, z.B. Biegefestigkeit, Bruchfestigkeit, Zugfestigkeit, Flexibilität und Zähigkeit.

Die Formkörper aus den erfindungsgemässen Zusammensetzungen weisen hohe elektrische Leitfähigkeiten auf, die bei Polyheteroaromaten im allgemeinen über 0,1 S/cm liegen. Die Leitfähigkeit kann durch Tempern von Formkörpern oder durch den Druck und/oder die Temperatur bei Formgebungsverfahren oder durch Verstreckung von Filmen beinflusst werden. Beim Versaecken von Filmen im Bereich der Glasumwandlungstemperatur wird die elektrische Leitfähigkeit überraschend wesentlich erhöht. Die erfindungsgemässen Zusammensetzungen weisen ferner wertvolle mechanische Eigenschaften auf.

Die Formkörper und Filme aus erfindungsgemässen Zusammensetzungen können z.B. als elektrische Leiter, Elektroden, Kathoden für Batterien, elektromagnetische Abschirmungsmaterialien, elektrisch leitende Stäbe, Sensoren, antistatisches Verpackungsmaterial oder elektrisch leitendes Versiegelungsmaterial verwendet werden.

Die pulverförmigen Zusammensetzungen können auch als elektrisch leitende Füllstoffe in Polymere eingearbeitet werden, z.B. in Mengen von 0,1 bis 90, vorzugsweise 5 bis 80 Gew.-%, bezogen auf den Kunststoff. Geeignete Kunststoffe, z.B. aus dem Bereich der Duroplaste, Thermoplaste und strukturell vernetzter Polymere sowie Einarbeitungsmethoden und die Verwendung von z.B. Verarbeitungshilfsmitteln, anderen Füllstoffen, Farbstoffen und Stabilisatoren sind dem Fachmann geläufig. Ein weiterer Gegenstand der Erfindung ist die Verwendung der pulverförmigen Pressmassen als elektrisch leitende Füllstoffe für Kunststoffe. Formkörper aus diesen gefüllten Kunststoffen können je nach Menge des elektrisch leitenden Füllstoffs z.B. als elektrische Leiter oder als Bauteile zur Abschirmung elektrischer und magnetischer Felder verwendet werden. Ein weiterer Gegenstand der Erfindung ist die Verwendung der erfindungsgemässen pulverförmigen Zusammensetzung als Füllstoff für natürliche und synthetische Kunststoffe.

Ein anderer Gegenstand der Erfindung ist eine Zusammensetzung aus
a) einem thermoplastischen, duroplastischen oder strukturell vernetzten Polymer, dem
b) ein elektrisch leitender feinteiliger Füllstoff aus einer pulverförmigen erfindungsgemässen Zusammensetzung einverleibt ist.

Die Menge der Komponente b) kann 0,1 bis 90 Gew.-%, bevorzugt 5 bis 80 Gew.-% betragen, bezogen auf die Komponente a). Bei einer Menge bis zu etwa 20 Gew.-% werden elektrische Leitfähigkeiten erzielt, die z.B. für eine antistatische Ausrüstung und die Abschirmung von elektrischen Feldern geeignet sind. Hohe elektrische Leitfähigkeiten und z.B. als elektrische Leitergeeignete Formkörperwerden bei Zusatzmengen von über 20 Gew.-%, bevorzugt mindestens 30 Gew.-% erhalten.

Als Kunststoffe eignen sich z.B.:
1. Polymere von Mono- und Diolefinen, beispielsweise Polypropylen, Polyisobutylen, Polybuten-1, Polymethylpenten- 1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/LDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propyien-Buten-1-Copoiymere, Propylen-Isobutylen-Copolymere, Ethyien-Buten-1-Copoiymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.
3a. Kohlenwasserstoffharze (z.B. C₅-C₉) inklusive hydrierte Modifikationen davon (z.B. Klebrigmacherharze).
4. Polystyrol, Poly-(p-methylstyrol), Poly-(a-methylstyrol).
5. Copolymere von Styrol oder a-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder a-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA-oder ABS-Polymere bekannt sind.
7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid ; sowie deren Copolymere, wie Vinylchlorid-Vinylidenchlorid, Vinylchlorid-Vinylacetat oder Vinylidenchlorid-Vinylacetat.
8. Polymere, die sich von a,ß-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oderAcrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
13. Polyphenylenoxide und -sulfide und deren Mischungen mit Styrolpolymeren oder Polyamiden.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylylendiamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Polym-phenylen-isophthalamid. Block-Copolymere der vorstehend genanntenPolyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oderABS modifizierte Polyamide oder Copolyamide; sowie während der Verarbeitung kondensierte Polyamide ("RIM-Polyamid-systeme").
16. Polyharnstoffe, Polyimide, Polyamid-imide und Polybenzimidazole.
17. Polyester, die sich von Dicarbonsäuren und Dialkoholen und/odervon Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mitmehrwertigenAlkoholen,sowieVinylverbindungenalsVernetzungsmittel ableiten, wie auch deren halogenhaltige, schwerbrennbare Modidikationen.
23. Vernetzbare Acrylharze, die sich von substituierten Acrylsäureestern ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Der erfindungsgemässen Zusammensetzung können weitere Additive zur Verbesserung der Verarbeitungseigenschaften, der mechanischen, elektrischen und thermischen Eigenschaften, der Oberflächeneigenschaften und der Lichtstabilität einverleibt sein, zum Beispiel feinteilige Füllstoffe, Verstärkerfüllstoffe, Weichmacher, Gleit- und Entformungsmittel, Haftvermittler, Antioxidantien, Wärme- und Lichtstabilisatoren, Pigmente und Farbstoffe.

Die Herstellung dieser erfindungsgemässen Zusammensetzung kann nach in der Kunststofftechnik bekannten Verfahren erfolgen, zum Beispiel durch Vermischen des feinteiligen elektrisch leitenden Füllstoffs mit dem Kunststoff vor, während oder nach der Herstellung, durch Plastifizieren des Kunststoffs und Vermischen mit dem Füllstoff mittels Kalandrieren, Kneten, Extrudieren oder Spritzgiesen zur Herstellung von Granulaten oder Formkörpern. Es ist auch möglich, Kunststoffpulver mit dem Füllstoff trocken zu -vermischen und dann zu formen, oder den Füllstoff in einer Kunststofflösung zu suspendieren, dann das Lösungsmittel zu Entfernen und anschliessend zu verarbeiten.

Bei Duroplasten und strukturell vernetzten Polymeren wird der feinteilige Füllstoff zweckmässig vor der Formgebung und vor dem Härten bzw. Vernetzen zugesetzt, zum Beispiel durch gemeinsames Vermischen der Kunststoffkomponenten mit dem Füllstoff, wobei dieser zuvor einer Komponente einverleibt werden kann.

Diese erfindungsgemässe Zusammensetzung ist eine wertvolle Formmasse zur Herstellung antistatisch ausgerüsteter und elektrisch leitender Formteile aller Art, zum Beispiel Filme, Folien, Bänder, Fasern, Platten, Halbzeug, Formkörper und Gehäuse für Verwendungszwecke, wie sie zuvor erwähnt wurden. Hierbei können die für die Kunststoffverarbeitung üblichen Verfahren angewendet werden, zum Beispiel Kalandrieren, Spritzgiessen, Spritzpressen, Extrudieren, Tiefziehen, Press- und Sinterverfahren.

Der feinteilige elektrisch leitende Füllstoff ist thermoplastisch verformbar, besonders bei einer Verarbeitung unter Druck und erhöhter Temperatur. Solche Verarbeitungsverfahren sind daher bevorzugt, da hiermit im allgemeinen eine höhere elektrische Leitfähigkeit erzielt werden kann. Die Verträglichkeit mit den Basispolymeren kann über die Wahl des alkylsulfonierten Polyanions beeinflusst werden. Polyanionen mit funktionellen Gruppen, z.B. Hydroxylgruppen, können zu Vernetzungen mit entsprechenden Basispolymeren (z.B. Epoxidharze) führen. Die Formteile weisen bei guten mechanischen Eigenschaften hohe und dauerhafte elektrische Leitfähigkeiten auf, die bei Verwendung von Polyheteroaromaten als Polykation im allgemeinen mindestens 0,01 S/cm betragen. Die Leitfähigkeit kann durch Nachtempern der Formteile erhöht werden.

Ein weiterer Gegenstand der Erfindung ist die Verwendung dieser erfindungsgemässen Zusammensetzung zur Herstellung von elektrisch leitenden Formteilen.

Die nachfolgenden Beispiele erläutern die Erfindung näher. Die Leitfähigkeit wird nach der Vierpunktmethode gemessen. Die Zugfestigkeit wird nach DIN 53455 und die Glasumwandlungstemperatur (Tg) nach der Differential-Scanning-Calometrie. Prozentangaben sind Gewichtsprozente, wenn nicht anders vermerkt.

### A) Herstellungsbeispiele für Polymere mit versalzten Alkylsulfonatgruppen.

Beispiel A1: Herstellung eines sulfonatpropylierten Phenoxyharzes.
a) Zu einer Lösung von 51,2 g eines Polyadduktes aus Bisphenol-A-diglycidylether und Bisphenol-A (Polymerisatinsgrad 100) in 400 ml N-Methylpyrrolidon (NMP) werden nacheinander 33,4 g 1,3-Propansulfon und 25,4 g K₂C0₃ gegeben. Diese Mischung wird 3 Tage bei 120 °C gerührt. Die Reaktionsmischung wird nach dem Abkühlen in Wasser gegossen und das ausgefallene polymere Kaliumsalz abfiltriert, mit Wasser gewaschen und im Vakuum bei 50 °C getrocknet. Man erhält 50,6 g des Kaliumsalzes mit einer Tg von 95 °C. Der Substitutionsgrad wird elementaranalytisch ermittelt und beträgt 0,2 (20 Mol-%).
b) Zu einer Lösung von 15,6 g polymerem Salz gemäss Beispiel A1a in 200 ml Dimethylformamid (DMF) wird 10 ml 1 N wässrige HCI gegeben, eine Stunde bei 80 °C gerührt und dann Tri-n-butylamin zugetropft. Die Mischung wird einen Tag bei Raumtemperatur gerührt und danach in Wasser gegossen, mit Wasser gewaschen und im Vakuum getrocknet. Man erhält 15,4 g des polymeren Kaliumsalzes mit einer Tg von 58 °C. Der Substitutionsgrad wird elementaranalytisch ermittelt und beträgt 0,16 (16 Mol-%).

Beispiel A2: Herstellung eines sulfonatpropylierten Phenoxyharzes.

Zu einer Lösung von 34,8 g eines Polyadduktes aus Bisphenol-A-diglycidylether und Bisphenol-A (Polymerisatinsgrad 100, mittleres Molekulargewicht 26800) in 200 ml NMP werden nacheinander 22,4 g 1,3-Propansulton und 43,6 ml Tri-n-butylamin gegeben. Diese Mischung wird 17 h bei 150 °C gerührt. Die Reaktionsmischung wird nach dem Abkühlen in Wasser gegossen und das ausgefallene polymere Salz abfiltriert, mit Wasser gewaschen und im Vakuum bei 50 °C getrocknet. Man erhält 42,0 g des polymeren Tri-n-butylammoniumsalzes mit einer Tg von 65 °C. Der Substitutionsgrad wird elementaranalytisch ermittelt und beträgt 0,25 (25 Mol-%).

Beispiel A3: Herstellung eines sulfonatpropylierten Phenoxyharzes.

Es wird gemäss Beispiel A2 verfahren und 20,5 g Polyaddukt, 50 ml NMP, 22,3 g 1,3-Propansulton und 43,2 ml Tri-n-butylamin 47 h bei 150 °C umgesetzt. Man erhält 43,3 g des polymeren Tri-n-butylammoniumsalzes mit einer Tg von 65 °C. Der Substitutionsgrad wird elementaranalytisch ermittelt und beträgt 0,37 (37 Mol-%).

Beispiel A4: Herstellung eines sulfonatbutylierten Phenoxyharzes.

Es wird gemäss Beispiel A2 verfahren und 20,5 g Polyaddukt, 50 ml NMP, 14,8 g 1,4-Butansulton und 26,0 ml Tri-n-butylamin 24 h bei 160 °C umgesetzt. Man erhält 25,6 g des polymeren Tri-n-butylammoniumsalzes mit einer Tg von 80 °C. Der Substitutions-grad wird elementaranalytisch ermittelt und beträgt 0,32 (32 Mol-%).

### B) Anwendungsbeispiele

### Beispiel B1:

11,8 g polymeres Salz gemäss Beispiel A1a und 5 ml Pyrrol werden in einer Mischung aus 100 ml Propylencarbonat, 20 ml 1-Methoxy-2-propanol und 1 ml Wasser gelöst. Die Lösung wird mit Argon gespült und in eine Elektrolysezelle mit zwei rotierenden Nickelelektroden (Oberfläche 32 cm²) übergeführt. Nach einer Elektrolysedauervon 1,5 h bei einer Stromdichte von 1 A/cm² wird ein 135 µm dicker schwarzer Film von derAnode abgelöst, mit Ethanol gewaschen und dann im Vakuum bei 50 °C getrocknet. Die elektrische Leitfähigkeit beträgt 3,9 S/cm, die Zugfestigkeit beträgt 48 MPa und die Bruchdehnung 12% bei Raumtemperatur, und die Tg beträgt 75 °C. Nach dem Verstrecken des Films bei 100 °C um 110% beträgt die elektrische Leitfähigkeit 8,9 S/cm. Das molare Verhältnis von Sulfonatgruppen zu Pyrrolringen wird elementaranalytisch zu 0,19 bestimmt.

### Beispiel B2:

Es wird gemäss Beispiel B1 verfahren, aber 7,26 g Polymer gemäss Beispiel A2 und nur 80 ml Propylencarbonat verwendet. Man erhält einen 147 µm dicken schwarzen Film, der eine elektrische Leitfähigkeit von 6,8 S/cm, eine Zugfestigkeit von 62 MPa und eine Bruchdehnung von 5,4% aufweist, und die Tg beträgt 63 °C. Nach dem Verstrekken des Films bei 100 °C um 81% beträgt die elektrische Leitfähigkeit 14,7 S/cm. Das molare Verhältnis von Sulfonatgruppen zu Pyrrolringen wird elementaranalytisch zu 0,30 bestimmt.

### Beispiel B3:

Es wird gemäss Beispiel B2 verfahren, aber 5,64 g Polymer gemäss Beispiel A3 und nur 80 ml Propylencarbonat verwendet. Man erhält einen 107 µm dicken schwarzen Film, der eine elektrische Leitfähigkeit von 7,7 S/cm, eine Zugfestigkeit von 55 MPa und eine Bruchdehnung von 12% aufweist, und die Tg beträgt 62 °C. Nach dem Verstrekken des Films bei 100 °C um 102% beträgt die elektrische Leitfähigkeit 17,4 S/cm. Das molare Verhältnis von Sulfonatgruppen zu Pyrrolringen wird elementaranalytisch zu 0,33 bestimmt.

### Beispiel B4:

Es wird gemäss Beispiel B2 verfahren, aber 6,17 g Polymer gemäss Beispiel A4 und nur 80 ml Propylencarbonat verwendet. Man erhält einen 160 µm dicken schwarzen Film, der eine elektrische Leitfähigkeit von 7,3 S/cm, eine Zufestigkeit von 60 MPa und eine Bruchdehnung von 10% aufweist, und die Tg beträgt 75 °C. Nach dem Verstrekken des Films bei 100 °C um 109% beträgt die elektrische Leitfähigkeit 17,1 S/cm. Das molare Verhältnis von Sulfonatgruppen zu Pyrrolringen wird elementaranalytisch zu 0,33 bestimmt.

### Beispiel B5:

Zu einer Lösung aus 26.6 g Polymersalz gemäss Beispiel A3 und 5 ml Pyrrol in 100 ml Methoxyethanol wird bei Raumtemperatur tropfenweise eine Lösung von 33,9 g FeC1₃ in 200 ml Methoxyethanol gegeben. Die Mischung wird dann noch über Nacht bei Raumtemperatur gerührt. Der gebildete schwarze Niederschlag wird abfiltriert, mit Wasser gewaschen und bei 50 °C im Vakuum getrocknet. Man erhält 14,1 g schwarzes Pulver. Ein Teil davon wird zu einem Pellet von 13 mm Durchmesser verpresst. Die Messung der Leitfähigkeit nach der Methode von Van der Pau ergibt 1,53.10-³ S/cm.

## Patentansprüche

1. Zusammensetzung aus a) mindestens einem Polyheteroaromaten oder einem Polyanilin in oxidierter, polykationischer Form, und b) mindestens einem Polyanion eines filmbildenden thermoplastischen Polymeren mit sulfonatalkylierten Alkoholgruppen 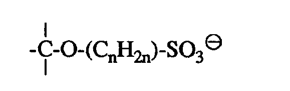
in wiederkehrenden Struktureinheiten, worin die Gruppe -(CₙH₂ₙ)-für lineares oder verzweigtes C₂-C₁₂-Alkylen mit 2 bis 5 C-Atomen in der Kohlenstoffkette steht, das unsubstituiert oder mit C₁-C₄-Alkoxy substituiert ist.

2. Zusammensetzung gemäss Anspruch 1, daurch gekennzeichnet, däss der Polyheteroaromat aus 5- oder 6- gliedrigen Ringen gebildet ist, die 1 bis 3 Heteroatome aus der Gruppe O, S und N enthalten, und deren C-Atome unsubstituiert oder mit C₁-C₁₆-Alkyl substituiert sind.

3. Zusammensetzung gemäss Anspruch 2, daurch gekennzeichnet, dass der 5- oder 6- gliedrige Ring ausgewählt ist aus der Gruppe Pyrrol, Thiophen, Furan, 2,2'-Bipyrrol, 2,2'-Bithiophen, 2,2'-Bifuran, Thiazol, Oxazol, Thiadiazol und Imidazol.

4. Zusammensetzung gemäss Anspruch 2, daurch gekennzeichnet, dass der Polyheteroaromat aus einem Pyrrol der Formel 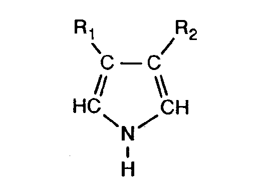
gebildet ist, worin R₁ und R₂ unabhängig voneinander H oder C₁-C₁₆-Alkyl oder C₁-C₁₆-Alkoxy oder R₁ und R₂ zusammen Tri- oder Tetramethylen bedeuten.

5. Zusammensetzung gemäss Anspruch 4, dadurch gekennzeichnet, dass der Polyheteroaromat aus pyrrol gebildet ist.

6. Zusammensetzung gemäss Anspruch 1, dadurch gekennzeichnet, dass sich das Polyanilin von Anilin selbst oder in 3-Stellung mit C₁-C₁₂-Alkyl oder C₁-C₁₂-Alkoxy substituiertem Anilin ableitet.

7. Zusammensetzung gemäss Anspruch 1, dadurch gekennzeichnet, däss pro Struktureinheit des Polyheteroaromaten 0,1 bis 0,9 Struktureinheiten mit sulfonatalkylierten Alkoholgruppen 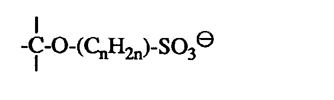
enthalten sind.

8. Zusammensetzung gemäss Anspruch 7, dadurch gekennzeichnet, dass 0,15 bis 0,4 Struktureinheiten rr sulfonatalkylierten Alkoholgruppen 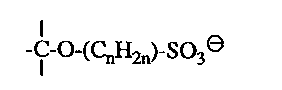
enthalten sind.

9. Zusammensetzung gemäss Anspruch 1, dadurch gekennzeichnet, däss die Gruppe -(CₙH₂ₙ)- lineares oder verzweigtes C₃-C₈-Alkylen mit 3 bis 5 C-Atomen in der Kohlenstoffkette darstellt.

10. Zusammensetzung gemäss Anspruch 9, dadurch gekennzeichnet, dass die Gruppe-(CₙH₂ₙ)- lineares C₃-C₅-Alkylen darstellt.

11. Zusammensetzung gemäss Anspruch 10, dadurch gekennzeichnet, dass die Gruppe -(CₙH₂ₙ)- für Ethylen, Methylethylen, Dimethylethylen, 1,3-Propylen, Methyl-1,3-propylen, Dimethyl-1,3-propylen, Trimethyl-1,3-propylen, 1,4-Butylen, Methyl-1,4-butylen, Dimethyl-1,4-butylen, Trimethyl-1,4-butylen, Tetramethyl-1,4-butylen, 1,3- oder 1,5-Pentylen und 1,3-, 1,4-, 1,5- oder 1,6-Hexylen steht.

12. Zusammensetzung gemäss Anspruch 11, dadurch gekennzeichnet, dass die Gruppe -(CₙH₂ₙ)- für 1,3-Propylen oder 1,4-Butylen steht.

13. Zusammensetzung gemäss Anspruch 1, dadurch gekennzeichnet, dass das thermoplästische Polymer in der Form mit versalzten sulfonatalkylierten Alkoholgruppen 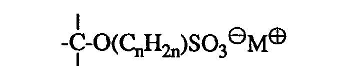
eine Glasumwandlungstemperatur von -100 bis 350°C aufweist, gemessen nach durch Differential-Scannning-Calorimetry, wobwei M⊕ ein Alkalimetall- oder ein Ammoniumkation bedeutet.

14. Zusammensetzung gemäss Anspruch 1, dadurch gekennzeichnet, dass das Verhältnis von freien Alkoholgruppen zu sulfonatalkylierten Alkoholgruppen 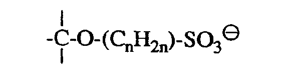
im thermoplastischen Polymer von 50:1 bis 1:50 beträgt.

15. Zusammensetzung gemäss Anspruch 14, dadurch gekennzeichnet, dass das Verhältnis 10:1 bis 1:10 beträgt.

16. Zusammensetzung gemäss Anspruch 1, dadurch gekennzeichnet, dass die sulfonatalkylierten Alkoholgruppen als sekundäre Gruppen CH-O-(CₙH₂ₙ)-SO₃⊖ oder tertiäre Gruppen C-O-(CₙH₂ₙ)SO₃⊖ im Polymerrückgrat; oder in Seitengruppen des Polymeren als primäre gruppen- CH₂-O-(CₙH₂ₙ)SO₃⊖ endständig, oder als sekundäre gruppen CH-O-(CₙH₂ₙ)SO₃⊖ oder als tertiäre gruppen C-0-(CₙH₂ₙ)SO₃⁹ mittelständig gebunden sind.

17. Zusammensetzung gemäss Anspruch 1, dadurch gekennzeichnet, dass den thermoplastischen Polymeren Hydroxylgruppen enthaltende Polymere oder Mischungen davon, aus der Gruppe Polyester, Polyesteramide, Polyurethane, Polyamide, Polycarbonate und Polyimide aus Hydroxylgruppen enthaltenden Monomeren; verseifte Polymerisate von Vinylestern oder-ethern; hydroxylierte Polydiolefine; Polyacrylate oder Polymethacrylate mit Hydroxyalkylresten in der Estergruppe; Polysiloxane mit Hydroxyalkylgruppen; reduzierte Polyketone oder Copolymere davon; Polyether aus Glycidylverbindungen und Diolen; sowie Copolymerisate von Vinylalkohol, oder Hydroxylalkyl enthaltenden Acrylaten oder Methacrylaten, oder hydroxylierten Diolefinen mit ethylenisch ungesättigten Comonomeren zu Grunde liegen.

18. Zusammensetzung gemäss Anspruch 17, dadurch gekennzeichnet, dass das Polymere aus der Gruppe Polyaddukte aus Glycidylverbindungen mit durchschnittlich mehr als einer Epoxidgruppe und einem Diol; Homo- und Copolymere von Hydroxyalkylacrylaten beziehungsweise -methacrylaten; Homo- und Copolymere von Vinylalkohol; Homo- und Copolymere von Butadien, Isopren und Chloropren, deren Doppelbindungen teilweise oder ganz hydroxyliertsind; Polyimide aus hydrierten Ketotetracarbonsäuren; Hydroxyalkylpolysiloxane; und Polyester, Polyamide, Polyurethane und Polyimide aus C₄-C₁₂-Alkenylendiolen beziehungsweise -diaminen, deren Doppelbindung hydroxyliert ist, ausgewählt ist.

19. Zusammensetzung gemäss Anspruch 1, dadurch gekennzeichnet, dass es sich bei dem thermoplastischen Polymer um ein mindestens teilweise sulfonatalkyliertes Polyaddukt aus a) einer Glycidylverbindung mit durchschnittlich mehr als einer Epoxidgruppe und b) einem Diol handelt, und das Polymer gruppen 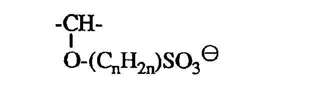
in der Polymerkette enthält, worin die Gruppe -CₙH₂ₙ- die in Anspruch 1 angegebenen Bedeutungen hat.

20. Zusammensetzung gemäss Anspruch 1, dadurch gekennzeichnet, dass das Polyaddukt, bezogen auf das Polyaddukt,
a) 100 bis 5 Mol-% gleiche oder verschiedene Struktureinheiten der Formel 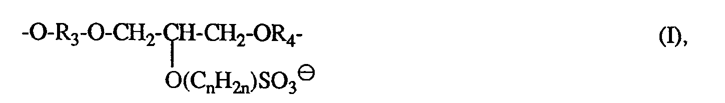
und
b) 95 bis 0 Mol-% gleiche oder verschiedene Struktureinheiten der Formel II 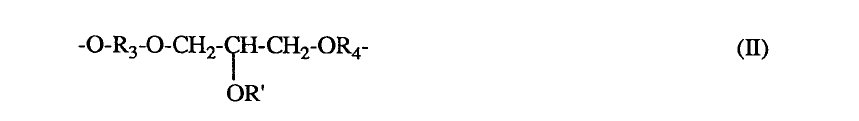
enthält, worin R₃ und R₄ unabhängig voneinander den um zwei Hydroxylgruppen verminderten Rest eines Diols mit aliphatischen oder aromatischen Diolgruppen darstellen, und R' H, C₁-C₂₀-Alkyl, C₁-C₂₀-Acyl oder mit einem C₁-C₂₀-Kohlenwasserstoffrest N-substituiertes Aminocarbonyl bedeutet.

21. Zusammensetzung gemäss Anspruch 20, dadurch gekennzeichnet, dass dass R' für H steht.

22. Zusammensetzung gemäss Anspruch 20, dadurch gekennzeichnet, dass 90 bis 10 Mol% Struktureinheiten der Formel und 10 bis 90 Mol% Strukurteinheiten der Formel II enthalten sind.

23. Zusammensetzung gemäss Anspruch 22, dadurch gekennzeichnet, dass 15 bis 60 Mol% Struktureinheiten der Formel und 85 bis 40 Mol% Struktureinheiten der Formel II enthalten sind.

24. Zusammensetzung gemäss Anspruch 20, dadurch gekennzeichnet, dass R₃ und R₄ gleiche Reste darstellen.

25. Zusammensetzung gemäss Anspruch 20, dadurch gekennzeichnet, däss R₃ und R₄ als aromatischer Diolrest Phenolgruppen enthält.

26. Zusammensetzung gemäss Anspruch 25, dadurch gekennzeichnet, dass R₃ und R₄ unabhängig voneinander einen Rest der Formel III 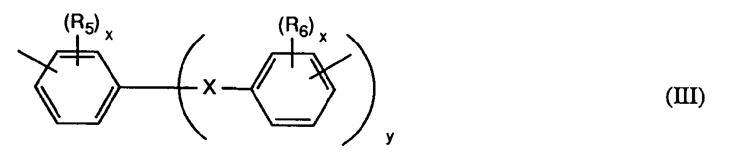
darstellen, worin X eine direkten Bindung, C₁-C₄-Alkylen, C₂-C₁₂-Alkyliden, C₅-C₈-Cycloalkyliden, -O-, -S-, -SO-, -SO₂-, -CO-, -CO₂, -N(C₁-C₄-Alkyl)- oder -Si(CH₃)₂- bedeutet, R₅ und R₆ unabhängig voneinander H, Halogen, C₁-C₄-Alkyl oder C₁-C₄-Alkoxy sind, und x 1 oder 2 bedeutet und y für 0 oder 1 steht.

27. Zusammensetzung gemäss Anspruch 26, dadurch gekennzeichnet, dass X eine direkte Bindung, Methylen, Ethylen, C₂-C₆-Alkyliden, Cyclohexyliden oder Cyclopentyliden, -O-oder-S- darstellt.

28. Zusammensetzung gemäss Anspruch 26, dadurch gekennzeichnet, dass R₃ und R₆ für H oder Methyl stehen.

29. Zusammensetzung gemäss Anspruch 26, dadurch gekennzeichnet, dass y für 1 steht.

30. Zusammensetzung gemäss Anspruch 26, dadurch gekennzeichnet, dass R₃ und R₄ den Rest 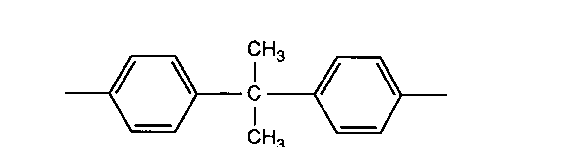
darstellen.

31. Zusammensetzung gemäss Anspruch 1, dadurch gekennzeichnet, dass das thermoplastische Polymer ein mindestens teilweise sulfonatalkylierter Polyvinylalkohol oder sulfonatalkyliertes Polyvinylalkohol-Copolymer mit Gruppen 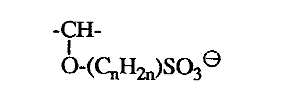
im Polymerrückgrat ist.

32. Zusammensetzung gemäss Anspruch 31, dadurch gekennzeichnet, dass es sich um ein Polyvinylalkoholcopolymer handelt, worin das Copolymer
a) 90 bis 5 Mol% Struktureinheiten der Formel IV 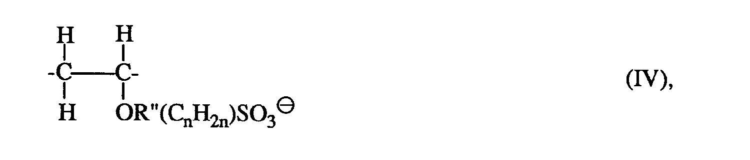
b) und 95 bis 10 Mol% gleiche oder verschiedene Struktureinheiten der Formel V 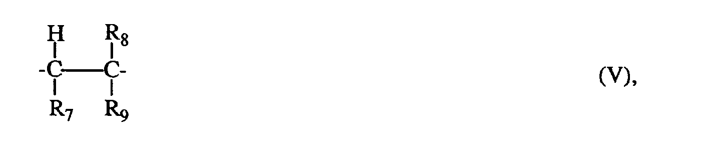
enthält, worin R₇ für H, C₁-C₆-Alkyl, -COOR₁₀ oder -COO° steht, R₈ H, F, Cl, CN oder C₁-C₆-Alkyl bedeutet, und Rg H, OH, R"OH, F, Cl, CN, R₁₀-O-, C₁-C₁₂-Alkyl, -COO⊖, -COOR₁₀, -OCO-R₁₀, Methylphenyl oder Phenyl darstellt, wobei R₁₀ C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder (C₁-C₁₂-Alkyl)benzyl darstellt und R" für lineares oder verzweigtes C₂-C₁₈-Alkylen, Poly(C₂-C₆-oxaalkylen) mit 2 bis 6 Oxaalkyleneinheiten steht.

33. Zusammensetzung gemäss Anspruch 32, dadurch gekennzeichnet, dass das Polymer 60 bis 10 Mol-% Struktureinheiten der Formel IV und 40 bis 90 Mol-% Struktureinheiten der Formel V enthält.

34. Zusammensetzung gemäss Anspruch 32, dadurch gekennzeichnet, dass in Formel V R₇ H bedeutet, R₈ H oder Methyl darstellt, und Rg H, OH, CN, Methyl, OCH₃ oder-COCH3 bedeutet.

35. Zusammensetzung gemäss Anspruch 32, dadurch gekennzeichnet, dass das Coplymer 5 bis 50 Mol-% Struktureinheiten der Formel IV, 95 bis 50 Mol-% Struktureinheiten der Formel -CH₂-CH₂- und 0 bis 20 Mol-% Struktureinheiten der Formel -CH₂-CH(OH)- enthalten, wobei sich die Mol-% zu 100 Prozent addieren.

36. Zusammensetzung gemäss Anspruch 1, dadurch gekennzeichnet, däss das thermoplastische Polymer ein sulfonalkyliertes Polymer eines teilhydroxylierten Polybutadiens, Chloroprens oder Polyisoprens ist.

37. Zusammensetzung gemäss Anspruch 36, dadurch gekennzeichnet, dass das Polymer 5 bis 70 Mol-% Struktureinheiten der Formel VI 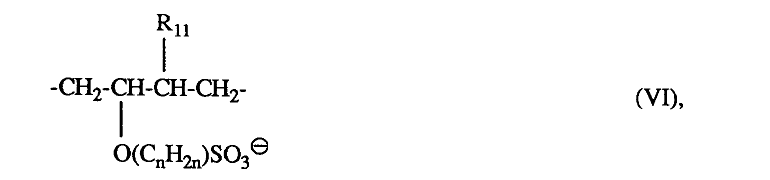
und 30 bis 95 Mol-% Struktureinheiten der Formel Vla, 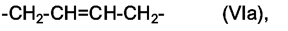
worin R₁₁ für H, OH oder CI steht und die Gruppe -CₙH₂ₙ- die in Anspruch 1 angegebene Bedeutung hat.

38. Zusammensetzung gemäss Anspruch 36, dadurch gekennzeichnet, dass 5 bis 50 Mol-% Struktureinheiten der Formel VI und 95 bis 50 Mol-% Struktureinheiten der Formel Vla enthalten sind.

39. Zusammensetzung gemäss Anspruch 36, dadurch gekennzeichnet, dass R₁₁ für H oder CI steht.

40. Zusammensetzung aus
a) einem thermoplastischen, duroplastischen oder strukturell vernetzten Polymer, dem
b) ein elektrisch leitender feinteiliger Füllstoff aus einer pulverförmigen Zusammensetzung gemäss Anspruch 1 einverleibt ist.

41. Zusammensetzung gemäss Anspruch 40, dadurch gekennzeichnet, däss die Menge der Komponente b) 0, 1 bis 90 Gew.-% beträgt, bezogen auf die Komponente a).

42. Zusammensetzung gemäss Anspruch 41, dadurch gekennzeichnet, däss die Menge der Komponente b) 5 bis 80 Gew.-% beträgt.

43. Verwendung der Zusammensetzungen gemäss Anspruch 1 zur Herstellung von elektrisch leitenden Formkörpern.

44. Verwendung der Zusammensetzungen gemäss Anspruch 40 zur Herstellung von antistatisch ausgerüsteten oder elektrisch leitenden Formteilen.
